# EUROPEAN PATENT APPLICATION

(11) **EP 4 831 706 A1**
(43) Date of publication of application: **28.10.2026**
(21) Application number: 24906839.6
(22) Date of filing: 11.09.2024
(51) Int. Cl.: G02B 6/38

(54) **ADAPTOR**

(30) Priority: 20.12.2023 JP 2023214402
(71) Applicant: Fujikura Ltd., Tokyo 135-8512 (JP)
(72) Inventor: KANNO Shuhei, Sakura-shi, Chiba 285-8550 (JP)
(74) Representative: Plasseraud IP
(86) International application number: PCT/JP2024/032546
(87) International publication number: WO 2025/134449

(57) **Abstract**

An adapter includes an inner socket configured to engage with the first optical connector, an enclosure configured to accommodate the inner socket and engage with the second optical connector, and a biasing unit configured to bias the inner socket against the enclosure toward the second optical connector with a third biasing force, in which a difference between the third biasing force and the second biasing force is smaller than a difference between the first biasing force of the first optical connector and the second biasing force of the second optical connector.

## Description

### TECHNICAL FIELD

The present invention relates to an adapter.

Priority is claimed on Japanese Patent Application No. 2023-214402, filed December 20, 2023, the content of which is incorporated herein by reference.

### BACKGROUND ART

Patent Document 1 discloses an adapter for connecting two optical connectors. In such an adapter, a good connection state is maintained by pressing connection end faces of ferrules of the respective optical connectors against each other with an appropriate biasing force. The biasing force is generated by a biasing member biasing the ferrule in a housing of each optical connector.

### Citation List

### Patent Document

Patent Document 1: Japanese Unexamined Patent Application, First Publication No. H9-304655

### SUMMARY OF INVENTION

### Technical Problem

The biasing force applied to the ferrule may vary depending on the type of the optical connector. That is, in a case where optical connectors of different types are connected to each other, the biasing force applied to each ferrule may vary. Here, in a case where the biasing force applied to each ferrule varies, the ferrules may be disposed at an inappropriate position (a position other than a predetermined bonding surface). Specifically, the ferrule to which a large biasing force is applied is pushed toward the ferrule to which a small biasing force is applied. As a result, an issue occurs in that a good connection state cannot be maintained.

The present invention has been made in consideration of such circumstances, and an object thereof is to provide an adapter that can appropriately connect two types of optical connectors having different biasing forces applied to ferrules.

### Solution to Problem

To address the above-described issue, according to a first aspect of the present invention, there is provided an adapter for connecting a first optical connector configured to bias a first ferrule having a first connection end face toward a first connection end face side with a first biasing force, and a second optical connector configured to bias a second ferrule having a second connection end face toward a second connection end face side with a second biasing force smaller than the first biasing force, the adapter including: an inner socket configured to engage with the first optical connector; an enclosure configured to accommodate the inner socket and engage with the second optical connector; and a biasing unit configured to bias the inner socket against the enclosure toward the second optical connector with a third biasing force, in which a difference between the third biasing force and the second biasing force is smaller than a difference between the first biasing force and the second biasing force.

According to a second aspect of the present invention, in the adapter according to the first aspect, the biasing unit may include a plurality of elastic members, and the plurality of elastic members may be disposed point-symmetrically about a central axis line of the inner socket.

According to a third aspect of the present invention, in the adapter according to the first or second aspect, the enclosure includes a first member configured to support the biasing unit and a second member configured to engage with the second optical connector, and the inner socket may be movable relative to the first member and the second member.

According to a fourth aspect of the present invention, in the adapter according to any one of the first to third aspects, the enclosure may not engage with a housing of the first optical connector.

### Advantageous Effects of Invention

According to the adapter of the above aspect of the present invention, it is possible to appropriately connect two types of optical connectors having different biasing forces applied to ferrules.

### BRIEF DESCRIPTION OF DRAWINGS

[FIG. 1] A perspective view of an optical connection structure according to the present embodiment.
[FIG. 2] A perspective view of the first optical connector of FIG. 1.
[FIG. 3] A perspective view of the second optical connector of FIG. 1.
[FIG. 4] An exploded perspective view of the adapter of FIG. 1.
[FIG. 5] A perspective view of the inner socket in which a part is shown in cross section along a V-V line of FIG. 4.
[FIG. 6] A cross-sectional view taken along line VI-VI of FIG. 1.

### DESCRIPTION OF EMBODIMENTS

Hereinafter, the adapter and the optical connection structure according to the present embodiment will be described with reference to the drawings.

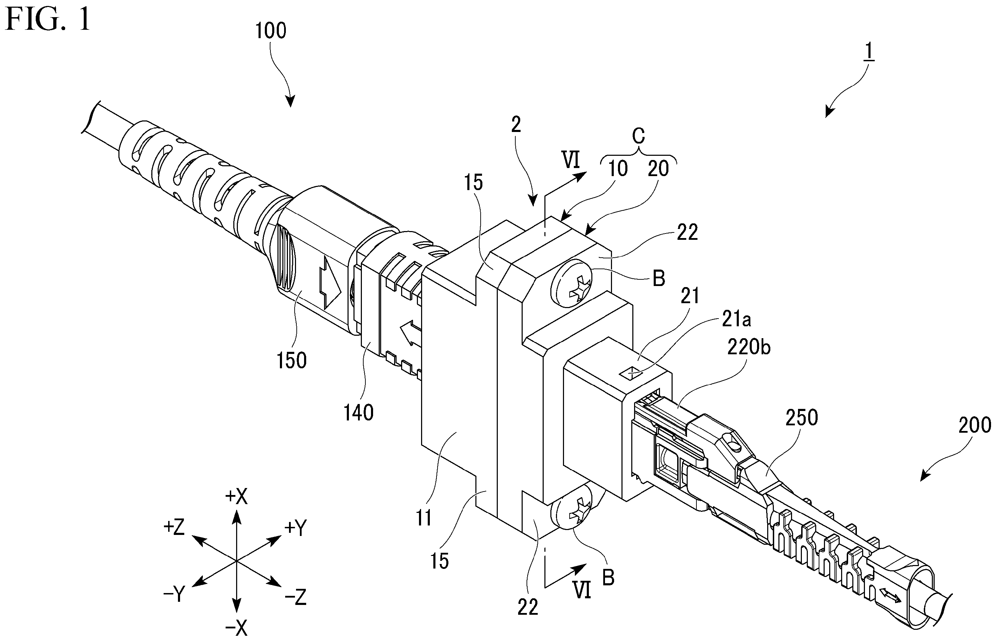

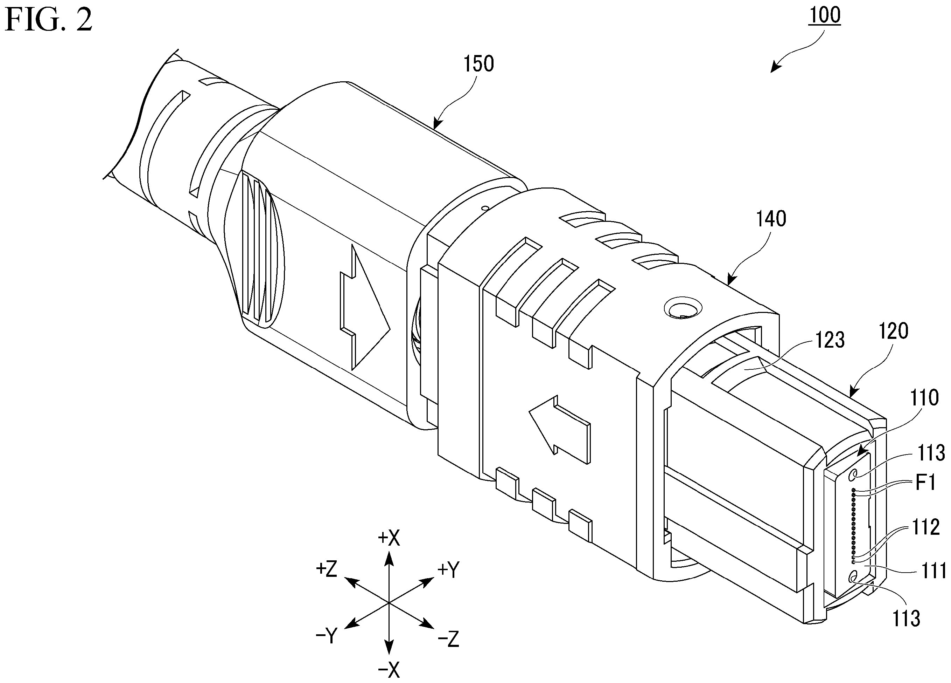

As shown in FIG. 1, an optical connection structure 1 includes a first optical connector 100, a second optical connector 200, and an adapter 2. As shown in FIG. 2, the first optical connector 100 includes a first ferrule 110 having a first connection end face 111 and a first housing 120 that holds the first ferrule 110 therein. A plurality of optical fibers F1 (first optical fibers) are exposed at the first connection end face 111.

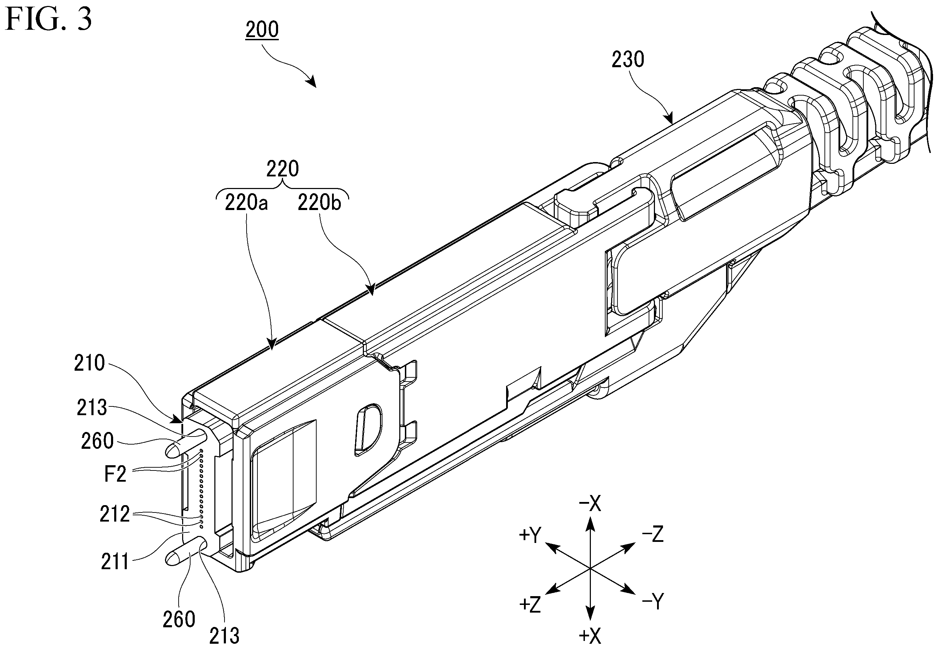

As shown in FIG. 3, the second optical connector 200 includes a second ferrule 210 having a second connection end face 211 and a second housing 220 that holds the second ferrule 210 therein. A plurality of optical fibers F2 (second optical fibers) are exposed at the second connection end face 211. The adapter 2 has a function of holding a state in which the first connection end face 111 and the second connection end face 211 are in contact with each other at appropriate positions. As a result, the optical connection structure 1 can optically connect the plurality of optical fibers F1 and the plurality of optical fibers F2.

As shown in FIG. 3, the second optical connector 200 includes two positioning pins 260. As shown in FIG. 2, the first optical connector 100 includes two first positioning holes 113. The positioning pins 260 are inserted into the first positioning holes 113, whereby relative positions of the first optical connector 100 and the second optical connector 200 are determined. In the present embodiment, the first optical connector 100 is a female-side connector, and the second optical connector 200 is a male-side connector. However, the first optical connector 100 may be a male-side connector, and the second optical connector 200 may be a female-side connector. That is, the first optical connector 100 may include the positioning pins, and the second optical connector 200 may not include the positioning pins.

### (Direction definition)

As shown in FIG. 1, a direction in which the first connection end face 111 of the first optical connector 100 and the second connection end face 211 of the second optical connector 200 face each other is referred to as an axial direction Z. In the axial direction Z, a side (+Z side) from the second optical connector 200 toward the first optical connector 100 is referred to as a "first optical connector side" or a "proximal end side of the first optical connector". The opposite side (-Z side) is referred to as a "second optical connector side" or a "proximal end side of the second optical connector". A direction orthogonal to the axial direction Z is referred to as a first orthogonal direction X. The first orthogonal direction X is also a direction in which the optical fibers F1, F2 are arranged at the connection end faces 111, 211 (see FIGS. 2 and 3). A direction orthogonal to both the axial direction Z and the first orthogonal direction X is referred to as a second orthogonal direction Y. One side in the first orthogonal direction X is referred to as a +X side, and the other side is referred to as a -X side. One side in the second orthogonal direction Y is referred to as a +Y side, and the other side is referred to as a -Y side.

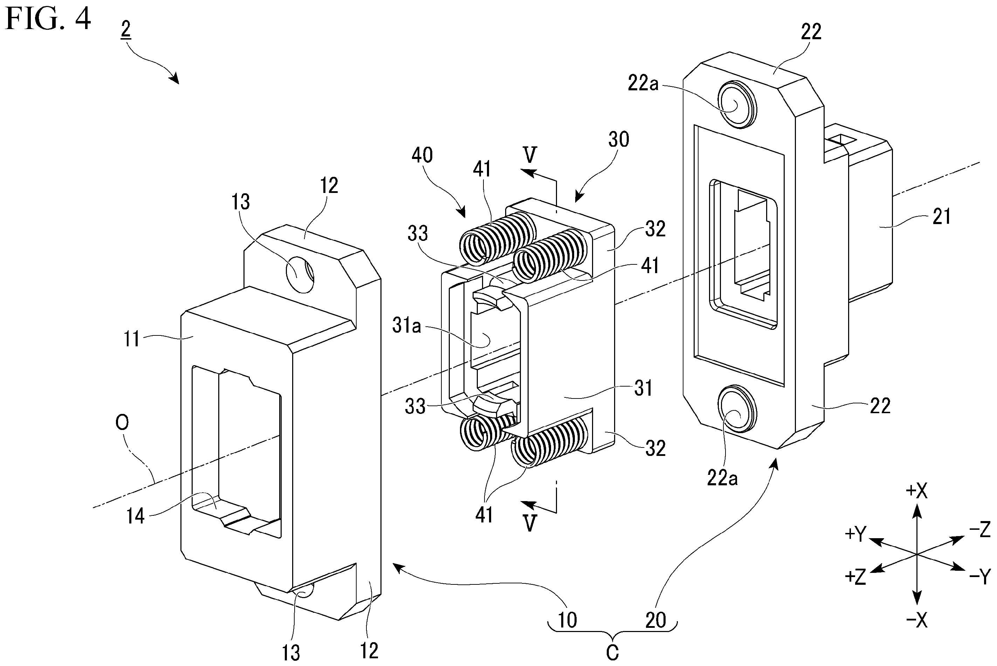

As shown in FIG. 4, the adapter 2 according to the present embodiment includes an enclosure C, an inner socket 30, and a biasing unit 40. Each of the constituent members of the adapter 2 has a shape based on a common central axis line O. The central axis line O is parallel to the axial direction Z. The enclosure C includes a first member 10 and a second member 20. The first member 10 is positioned on the +Z side, and the second member 20 is positioned on the -Z side. The enclosure C is formed by combining the two members 10, 20. However, the enclosure C may be a single member.

The biasing unit 40 biases the inner socket 30 toward the -Z side inside the enclosure C. The biasing unit 40 includes a plurality of elastic members 41. In the present embodiment, the elastic members 41 are cylindrical compression springs. In addition, the number of the elastic members 41 is four. The four elastic members 41 are disposed point-symmetrically about the central axis line O of the adapter 2 (that is, the central axis line O of the inner socket 30). The shape, the number, and the disposition of the elastic members 41 may be changed as long as the inner socket 30 can be biased toward the -Z side.

As shown in FIG. 4, the first member 10 includes a first main body portion 11 and two first flange portions 12. The first main body portion 11 is a tubular portion extending about the central axis line O. In the present embodiment, since the shape of the first housing 120 is substantially a rectangular parallelepiped, the first main body portion 11 is also a quadrangular tubular shape (see Figs. 1 and 2). The shape of the first main body portion 11 and the first housing 120 may be changed.

A first insertion port 14 is provided inside the first main body portion 11. The first insertion port 14 is open toward the +Z side. In a case where the optical connectors 100, 200 are connected using the adapter 1, the first optical connector 100 is inserted into the adapter 2 through the first insertion port 14.

As shown in FIG. 4, the two first flange portions 12 protrude from the first main body portion 11 toward the +X side and the -X side. The first flange portions 12 are used to fix the first member 10 and the second member 20. A first fixing hole 13 is formed in each of the two first flange portions 12.

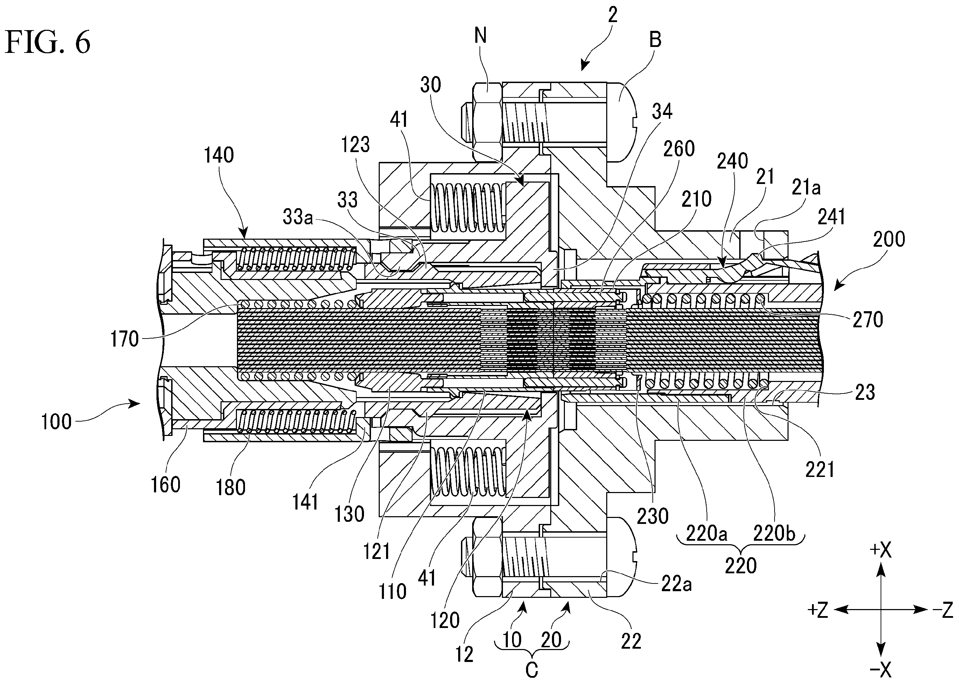

The second member 20 includes a second main body portion 21 and two second flange portions 22. The second main body portion 21 is a tubular portion extending about the central axis line O. In the present embodiment, since the shape of the second housing 220 is substantially a rectangular parallelepiped, the second main body portion 21 is also a quadrangular tubular shape. The shape of the second main body portion 21 and the second housing 220 may be changed. A second insertion port 23 is provided at an end portion of the second main body portion 21 on the -Z side (see FIG. 6). The second insertion port 23 is open toward the -Z side. In a case where the optical connectors 200, 100 are connected using the adapter 2, the second optical connector 200 is inserted into the adapter 2 through the second insertion port 23.

As shown in FIG. 4, a second fixing hole 22a is formed in each of the two second flange portions 22. A ring-shaped positioning protrusion that protrudes toward the +Z side along an opening edge of the second fixing hole 22a is formed. The positioning protrusion is fitted to the inside of the first fixing hole 13 in the first member 10. As a result, the relative positions of the first member 10 and the second member 20 are determined.

The first member 10 and the second member 20 are fixed to each other by a fixing member. The fixing member in the example of FIG. 6 is a screw B and a nut N. More specifically, two screws B are inserted into the first fixing hole 13 and the second fixing hole 22a, and the nut N is screwed to an end portion of each screw B. The fixing member is not limited to the screw and the nut, and may be, for example, an adhesive or the like.

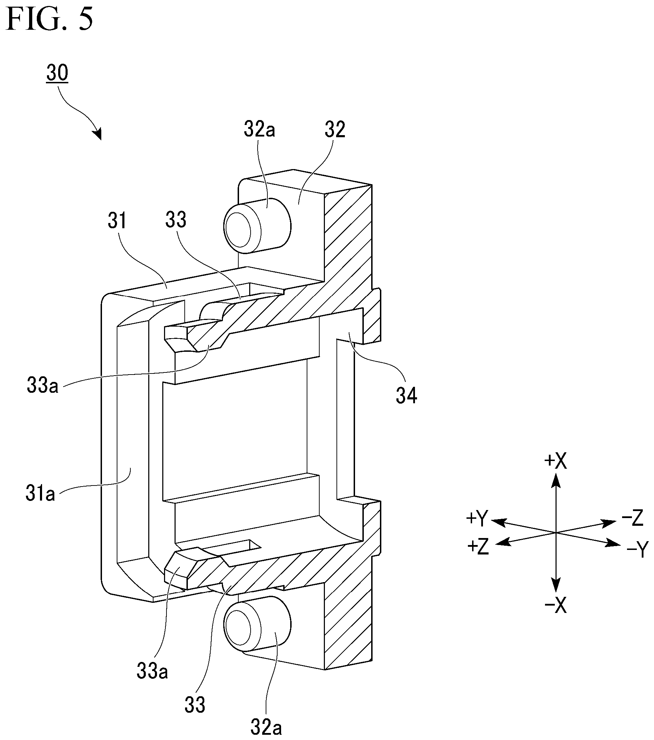

As shown in FIGS. 4 and 5, the inner socket 30 includes a socket main body portion 31, two socket flanges 32, two engagement pieces 33, and a restriction portion 34. The socket main body portion 31 is a rectangular tubular portion extending about the central axis line O. The socket main body portion 31 includes an opening portion 31a that is open toward the +Z side. The first housing 120 of the first optical connector 100 enters an inside of the inner socket 30 through the opening portion 31a (see FIG. 6).

As shown in FIG. 5, the two socket flanges 32 protrude from an end portion of the socket main body portion 31 on the -Z side toward both sides in the first orthogonal direction X. Two holding protrusions 32a are formed on each socket flange 32. That is, the inner socket 30 includes a total of four holding protrusions 32a. The holding protrusions 32a protrude from the socket flanges 32 toward the +Z side. The four holding protrusions 32a hold the four elastic members 41 of the biasing unit 40 (see FIG. 4).

The two engagement pieces 33 extend along the axial direction Z. The two engagement pieces 33 are disposed to be spaced from each other with the central axis line O interposed therebetween in the first orthogonal direction X. Each engagement piece 33 includes an engagement portion 33a that protrudes toward an inner space of the first main body portion 11. Each engagement piece 33 is elastically deformable in the first orthogonal direction X from about a proximal end portion (an end portion of the engagement piece 33 on the -Z side) as a starting point. The engagement pieces 33 and the engagement portions 33a have a function of engaging the first optical connector 100 with the inner socket 30.

As shown in FIG. 5, the restriction portion 34 is positioned at an end portion of the socket main body portion 31 on the -Z side. The restriction portion 34 has a rectangular frame shape. As shown in FIG. 6, the first ferrule 110 is inserted into the restriction portion 34. The first housing 120 abuts the restriction portion 34. As a result, movement of the first optical connector 100 excessively toward the -Z side with respect to the inner socket 30 is restricted.

As shown in FIG. 6, the first optical connector 100 includes a first intermediate member 130, a movable member 140, a first boot 150 (see FIG. 1), a support member 160, a first biasing member 170, and two auxiliary biasing members 180, in addition to the first ferrule 110 and the first housing 120. As shown in FIG. 2, the first ferrule 110 includes a plurality of first fiber holes 112 and the two first positioning holes 113 described above. The plurality of first fiber holes 112 and the two first positioning holes 113 are open to the first connection end face 111. The two first positioning holes 113 are disposed to be spaced from each other in the first orthogonal direction X and to be disposed with the plurality of first fiber holes 112 interposed therebetween. The first optical fiber F1 is inserted into each first fiber hole 112.

As shown in FIG. 6, the first housing 120 includes a housing portion 121. The housing portion 121 is a prismatic tubular portion extending in the axial direction Z. A part of the first ferrule 110, the first intermediate member 130, the first biasing member 170, and a part of the support member 160 are accommodated inside the housing portion 121. The first housing 120 includes two protrusions 123 that protrude from the housing portion 121 toward the +X side and the -X side. The engagement portions 33a of the engagement pieces 33 are engaged with the two protrusions 123. As a result, movement of the first housing 120 toward the +Z side with respect to the adapter 2 is restricted.

The first intermediate member 130 is in contact with an end portion of the first ferrule 110 on the +Z side. The first intermediate member 130 transmits the biasing force of the first biasing member 170 to the first ferrule 110. In the present embodiment, the biasing force of the first biasing member 170 is not substantially used. Details thereof will be described below. The movable member 140 is a so-called push-pull and is a member that is gripped by a user during attachment and detachment. The movable member 140 is a prismatic tubular portion extending in the axial direction Z and surrounds the first housing 120 from the outside. A spring seat 141 that protrudes toward the inside is formed on the movable member 140. The movable member 140 is movable in the axial direction Z relative to the first housing 120. The two auxiliary biasing members 180 are disposed in a gap between the movable member 140 and the first housing 120.

An end portion of the auxiliary biasing member 180 on the +Z side is in contact with the wide portion 122 of the first housing 120, and an end portion of the auxiliary biasing member 180 on the -Z side is in contact with the spring seat 141 of the movable member 140. The auxiliary biasing members 180 are, for example, coil springs and are compressed in the axial direction Z. Therefore, the movable member 140 receives a biasing force toward the -Z side from the auxiliary biasing members 180. In a state where an external force does not act on the movable member 140, by a biasing force of the auxiliary biasing members 180, and an end portion of the movable member 140 on the -Z side enters between the first main body portion 11 and the engagement pieces 33 in the adapter 2. Therefore, the engagement pieces 33 are restricted from elastically deforming toward the outside. In a case where the movable member 140 is moved toward the +Z side against the biasing force by the user, the movable member 140 is detached from the adapter 2, whereby the engagement pieces 33 are elastically deformable toward the outside in the first orthogonal direction X.

In a case of removing the first optical connector 100 from the adapter 2, the first optical connector 100 may be pulled toward the +Z side in a state where the movable member 140 is moved toward the +Z side. The engagement portions 33a abuts the inclined surface of the protrusions 123, whereby the engagement pieces 33 are elastically deformed toward the outside in the first orthogonal direction X. As a result, the engagement of the engagement portions 33a with the protrusions 123 is released, and the first optical connector 100 is detached from the adapter 2.

As shown in FIG. 6, the second optical connector 200 includes a second intermediate member 230, an elastic engagement piece 240, and a second boot 250, in addition to the second ferrule 210 and the second housing 220. As shown in FIG. 3, the second ferrule 210 includes a plurality of second fiber holes 212 and two second positioning holes 213. The plurality of second fiber holes 212 and the two second positioning holes 213 are open to the second connection end face 211. The two second positioning holes 213 are disposed to be spaced from each other in the first orthogonal direction X and to be disposed with the plurality of second fiber holes 212 interposed therebetween. The positioning pins 260 are inserted into the second positioning holes 213. The second optical fiber F2 is inserted into each second fiber hole 212.

As shown in FIG. 6, the second housing 220 includes a distal end-side member 220a and a proximal end-side member 220b. The second housing 220 is formed by combining the two members 220a, 220b. The second housing 220 may be a single member. A part of the second ferrule 210, the second intermediate member 230, and a second biasing member 270 are accommodated inside the second housing 220.

The second intermediate member 230 is in contact with an end portion of the second ferrule 210 on the -Z side. The second intermediate member 230 has a role of transmitting the biasing force of the second biasing member 270 to the second ferrule 210. In addition, the second intermediate member 230 holds the two positioning pins 260. Therefore, the second intermediate member 230 is also referred to as a pin clamp. The elastic engagement piece 240 is disposed on the -X side of the second housing 220. The elastic engagement piece 240 includes an engagement protrusion 241 that protrudes toward the -X side. In addition, the second main body portion 21 includes an engagement hole 21a. The engagement protrusion 241 is engaged with the engagement hole 21a, whereby the second optical connector 200 is restricted from moving toward the -Z side with respect to the adapter 2. Although details will be omitted, in a case of removing the second optical connector 200 from the adapter 2, the elastic engagement piece 240 is elastically deformed, and the engagement protrusion 241 is moved to the +X side and the engagement of the engagement protrusion 241 with the engagement hole 21a is released.

The proximal end-side member 220b of the second housing 220 has a second support face 221 facing the +Z side. An end portion of the second biasing member 270 on the -Z side is in contact with the second support face 221. An end portion of the second biasing member 270 on the +Z side is in contact with the second intermediate member 230. The second biasing member 270 is, for example, a coil spring and is compressed between the second support face 221 and the second intermediate member 230.

With the above-described configuration, a biasing force toward the -Z side generated by the first biasing member 170 acts on the first ferrule 110. In addition, a biasing force toward the +Z side generated by the second biasing member 270 acts on the second ferrule 210. Here, in the present embodiment, the types of the first optical connector 100 and the second optical connector 200 are different. An area of the first connection end face 111 is larger than an area of the second connection end face 211. In addition, the biasing force acting on the first ferrule 110 is larger than the biasing force acting on the second ferrule 210. As a specific example, the biasing force (first biasing force) acting on the first ferrule 110 is in a range of 18 to 22 N, and the biasing force (second biasing force) acting on the second ferrule 210 is in a range of 7 to 13 N.

Next, an operation of the optical connection structure 1 according to the present embodiment will be described.

As shown in FIG. 6, the inner socket 30 and the first housing 120 are engaged with each other by the engagement portions 33a and the protrusions 123. In addition, the inner socket 30 is biased toward the -Z side with respect to the first member 10 by the action of the biasing unit 40. Therefore, the first housing 120 is also biased toward the - Z side by the biasing unit 40. In a case where the first ferrule 110 abuts the second ferrule 210, the second ferrule 210 presses the first ferrule 110 by the biasing force of the second biasing member 270.

Here, the first ferrule 110 is biased by the first biasing member 170. However, a reaction force of the first biasing member 170 is supported by the first housing 120 through the support member 160. The first housing 120 is biased with respect to the first member 10 by the biasing unit 40. As a result, the first biasing member 170 and the biasing unit 40 are mechanically in a structure of springs connected in series. Since the biasing force of the biasing unit 40 is smaller than the biasing force of the first biasing member 170, the biasing unit 40 is preferentially compressed and deformed over the first biasing member 170 in a case where the first ferrule 110 is pressed by the second ferrule 210.

That is, positions of the first ferrule 110 and the second ferrule 210 in the axial direction Z in a case where the first ferrule 110 abuts the second ferrule 210 are mainly determined by a balance between the biasing force of the biasing unit 40 and the biasing force of the second biasing member 270. Here, in the present embodiment, the third biasing force by the biasing unit 40 and the second biasing force by the second biasing member 270 substantially coincide with each other. As a specific example, the second biasing force by the second biasing member 270 is 10 N. The biasing unit 40 includes four elastic members 41, and the biasing force of each elastic member 41 is 2.5 N. That is, the third biasing force by the biasing unit 40 is 4 × 2.5 = 10 N, which coincides with the second biasing force of the second biasing member 270.

As described above, even in a case where the biasing force of the first biasing member 170 is larger than the biasing force of the second biasing member 270, the first ferrule 110 is prevented from excessively entering the second ferrule 210 side. Therefore, the first connection end face 111 and the second connection end face 211 can be disposed at predetermined positions in the axial direction Z.

In the above, a case where the second biasing force by the second biasing member 270 and the third biasing force by the biasing unit 40 substantially coincide with each other has been described. However, in a case where the difference between the third biasing force and the second biasing force is smaller than the difference between the first biasing force and the second biasing force, an effect can be obtained.

As described above, the adapter 2 according to the present embodiment connects the first optical connector 100 that biases the first ferrule 110 having the first connection end face 111 toward the first connection end face 111 side with the first biasing force, and the second optical connector 200 that biases the second ferrule 210 having the second connection end face 211 toward the second connection end face 211 side with the second biasing force smaller than the first biasing force. The adapter 2 includes the inner socket 30 that engages with the first optical connector 100, the enclosure C that accommodates the inner socket 30 and that engages with the second optical connector 200, and the biasing unit 40 that biases the inner socket 30 against the enclosure C toward the second optical connector 200 with the third biasing force, in which a difference between the third biasing force and the second biasing force is smaller than a difference between the first biasing force and the second biasing force. According to the adapter 2, two types of optical connectors 100, 200 having different biasing forces applied to the ferrules 110, 210 can be appropriately connected to each other.

In addition, the biasing unit 40 includes a plurality of elastic members 41, and the plurality of elastic members 41 are disposed point-symmetrically about the central axis line O of the inner socket 30. According to this configuration, the inner socket 30 can be biased evenly by the plurality of elastic members 41. Therefore, it is possible to prevent the first optical connector 100 engaged with the inner socket 30 from tilting.

In addition, the enclosure C includes the first member 10 that supports the biasing unit 40 and the second member 20 that engages with the second optical connector 200. The inner socket 30 is movable in the axial direction Z relative to the first member 10 and the second member 20. With this configuration, a structure in which the inner socket 30 floats inside the enclosure C can be realized.

In addition, the enclosure C of the present embodiment does not engage with the first housing 120 of the first optical connector 100. With this configuration, the biasing force of the biasing unit 40 can be substantially applied to the first ferrule 110 instead of the first biasing member 170.

It is noted that the technical scope of the present invention is not limited to the embodiment, and various changes can be made within the scope of the present invention without departing from the spirit of the present invention.

For example, the structures of the optical connectors 100, 200 described above are examples, and the disclosure of the embodiment can be suitably used as long as the optical connectors are two types of optical connectors having different biasing forces applied to the ferrules.

In addition, it is possible to appropriately replace the components in the embodiment with well-known components within the scope of the present invention, and the embodiment and the modification example may be appropriately combined.

### INDUSTRIAL APPLICABILITY

According to the adapter of the above aspect of the present invention, it is possible to appropriately connect two types of optical connectors having different biasing forces applied to ferrules.

### REFERENCE SIGNS LIST

2 Adapter
10 First member
20 Second member
30 Inner socket
40 Biasing unit
41 Elastic member
100 First optical connector
110 First ferrule
111 First connection end face
200 Second optical connector
210 Second ferrule
211 Second connection end face
C Enclosure
O Central axis line

## Claims

1. An adapter for connecting a first optical connector configured to bias a first ferrule having a first connection end face toward a first connection end face side with a first biasing force, and a second optical connector configured to bias a second ferrule having a second connection end face toward a second connection end face side with a second biasing force smaller than the first biasing force, the adapter comprising:
an inner socket configured to engage with the first optical connector;
an enclosure configured to accommodate the inner socket and engage with the second optical connector; and
a biasing unit configured to bias the inner socket against the enclosure toward the second optical connector with a third biasing force,
wherein a difference between the third biasing force and the second biasing force is smaller than a difference between the first biasing force and the second biasing force.

2. The adapter according to Claim 1,
wherein the biasing unit includes a plurality of elastic members, and
the plurality of elastic members are disposed point-symmetrically about a central axis line of the inner socket.

3. The adapter according to Claim 1 or 2,
wherein the enclosure includes a first member configured to support the biasing unit and a second member configured to engage with the second optical connector, and
the inner socket is movable relative to the first member and the second member.

4. The adapter according to any one of Claims 1 to 3,
wherein the enclosure does not engage with a housing of the first optical connector.
